# EUROPÄISCHE PATENTSCHRIFT

(11) **EP 1 712 060 B1**
(45) Veröffentlichungstag und Bekanntmachung des Hinweises auf die Patenterteilung: **17.10.2007**
(21) Anmeldenummer: 05701636.2
(22) Anmeldetag: 01.02.2005
(51) Int. Cl.: H04L 29/06

(54) **VERFAHREN ZUM AUSHANDELN VON BEAREREIGENSCHAFTEN IN IP NETZEN**
METHOD FOR NEGOTIATING BEARER PROPERTIES IN IP NETWORKS
PROCEDE DE NEGOCIATION DE PROPRIETES SUPPORTS DANS UN RESAU IP

(30) Priorität: 06.02.2004 DE 102004005936
(43) Veröffentlichungstag der Anmeldung: 18.10.2006
(73) Patentinhaber: NOKIA SIEMENS NETWORKS GMBH & CO. KG, 81541 München (DE)
(72) Erfinder: GOLDSTEIN, Peter, CH-8800 Thalwil (CH); KREUTER, Rüdiger, 81539 München (DE); LEIRICH, Rita, 81241 München (DE); PICHLMAIR, Egid, 85461 Bockhorn (DE); SIEGWART, Bernd, 86833 Ettringen (DE)
(86) Internationale Anmeldenummer: PCT/EP2005/050432
(87) Internationale Veröffentlichungsnummer: WO 2005/076566

(56) Entgegenhaltungen:
- WO-A-02/065787
- WO-A-03/049456
- US-A1- 2003 227 908

## Beschreibung

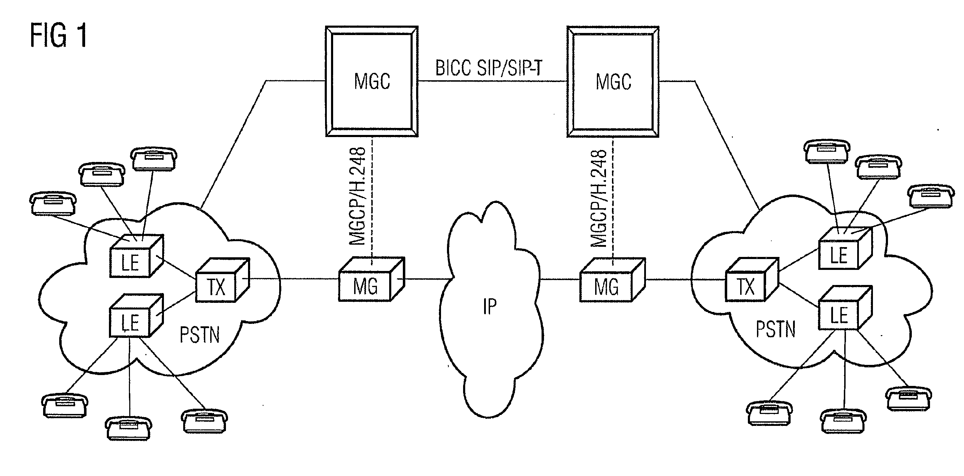

Neuere Kommunikationsarchitekturen, die paket- oder zellbasierte Verfahren zur Sprachsignalübertragung wie beispielsweise Voice over IP (VoIP) oder Voice over ATM (VoATM) nutzen, sehen die Trennung der Verbindungssteuerung und Nutzkanalsteuerung vor. Die bislang über herkömmliche leitungsvermittelte Telekommunikationsnetze geführte Kommunikation zwischen ein/ mehreren Teilnehmern wie beispielsweise ISDN Teilnehmern wird dann über IP Netze geführt. Als Endgeräte können nach wie vor herkömmliche analoge oder ISDN Endgeräte eingesetzt werden. Die grundsätzlichen Verhältnisse für ISDN-Teilnehmer, zwischen denen ein Internetnetz IP angeordnet ist, sind Fig. 1 entnehmbar.

Grundsätzlich werden die vermittlungstechnischen Netzwerke in Einheiten, die dem Transport der Nutzinformationen (Träger oder Bearer) dienlich sind sowie in Einheiten zur Steuerung dieser Nutzverbindungen (Bearer Control) aufgeteilt. Um eine Kommunikation mit herkömmlichen leitungsvermittelten Telekommunikationsnetzen z. B. PSTNs (Public Switched Telephone Networks) weiterhin zu ermöglichen, ist eine "Übersetzung" zwischen diesen beiden unterschiedlichen Transporttechnologieen erforderlich, die in den Kopplungspunkten vorgenommen wird.

An einem solchen Kopplungspunkt wird die erste Transporttechnologie für die Nutzinformation mittels spezieller, als Media Gateway (MG) bezeichneten Einrichtungen in die zweite Transporttechnologie umgewandelt. Media Gateways besitzen sowohl Schnittstellen zu PSTN/ ISDN- als auch IP/ ATM-Netzwerken und bilden damit die Schnittstellen zwischen leitungsvermittelnden und paketorientierten Netzen. Sie können in Echtzeit TDM (Time Division Multiplexing) basierte Sprachübertragung in Paket (VoIP)/ Zellen (VoATM) basierte Sprachübertragung umwandeln und umgekehrt.

Die Media Gateways werden von zentralen Instanzen, den Media Gateway Controllern (MGC), gesteuert (Fig. 1). Die zwischen zwei Media Gateway Controllern übertragenen Signalsierungs-Informationen werden z. B. mittels eines BICC Protokolls (Bearer Independent Call Control Protokoll) transportiert.
Die Media Gateway Controller dienen im wesentlichen der Koordination der Media Gateways und überwachen/ steuern Verbindungen (Bearerverbindungen) zwischen den Media Gateways. Die Steuerung der Media Gateways erfolgt mit Hilfe des MGCP (Media Gateway Controller Protocol) oder auch des H.248-Protokolls.

Grundsätzlich sind in den Media Gateways die Übertragungseigenschaften festgelegt. Wenn beispielsweise der Teilnehmer eines A-Law Landes eine Verbindung zu einem in einem µ-Law Land angeordneten Teilnehmer aufzubauen wünscht, kommen diese Eigenschaften zum Tragen. Falls die Nutzinformationen der beiden Teilnehmer nach unterschiedlichen Gesetzen codiert werden, muss eine Umsetzung der Nutzinformationen erfolgen. Beispielsweise bei grenzüberschreitendem Telefon - und Datenverkehr aus Europa (A-Law) nach USA (µ-Law) kommt diese Problematik zum Tragen.

Dies wird beispielsweise in der internationalen Patentanmeldung WO 03/049456 beschrieben.

Vor dem Umsetzungsprozess müssen die in den Informationsfluss eingebundenen Media Gateways untereinander pro Verbindungsaufbau gemeinsam unterstützte "Codecs und Capabilities" (Bearereigenschaften) aushandeln und sich auf bestimmte Einstellungen einigen. Jedes Media Gateway führt hierzu eine Liste der Bearereigenschaften, die es unterstütz und die bereits vom Werk aus voreingestellt ist.

Problematisch daran ist, dass damit lediglich die beiden Media Gateways Kentniss über die ausgehandelten Eigenschaften haben. Unter Umständen möchte nun aber der Netzbetreiber aus netzübergeordneten Gründen (z.B. aus wirtschaftlichen Gründen) bestimmte Bearereigenschaften (z.B. Codecs) mit anderer Priorität wie von den Media Gateways vorgegeben aushandeln bzw. bestimmte Bearereigenschaften (z.B. Codecs, RFC2833, T38) komplett ausschließen können. Dies ist bei diesem Stand der Technik nicht möglich.

Der Erfindung liegt die Aufgabe zugrunde, einen Weg aufzuzeigen, wie das Aushandeln der Bearereigenschaften derart ausgestaltet werden kann, dass die Regeln hierfür jederzeit geändert werden können.

Die Erfindung wird ausgehend von dem im Oberbegriff von Patentanspruch 1 angegebenen Merkmalen durch die kennzeichnenden Merkmale gelöst.

Vorteilhaft an der Erfindung ist das Vorsehen und Führen einer zusätzlichen Referenzliste im Media Gateway Controller. Dadurch wird die "network policy" im Media Gateway Controller an zentraler Stelle im Netz bereitgestellt. Der Media Gateway Controller erhält damit im Netz eine Masterfunktion, d. h. seine Referenzliste ist allein massgebend für die vom Media Gateway Controller gesteuerte Gruppe von Media Gateways unabhängig vom Stand der hier geführten Listen. Damit kann der Netzbetreiber mit minimalen Aufwand, unabhängig von der Größe seines Netzes (Anzahl aller Media Gateways / IP Clients), die Bearereigenschaften administrieren.

Das einfache Abändern der "network policy" wird dadurch erreicht, indem unerwünschte (d. h. unbekannte bzw. gesperrte) Bearereigenschaften durch Vergleich mit der Referenzliste im Media Gateway Controller ausgefiltert werden. Der Media Gateway Controller der A-Seite vergibt dann die Prioritäten für die nach der Filterung verbleibenden Bearereigenschaften auf Basis der eigenen Referenzliste neu. Diese zusätzliche Referenzliste im Media Gateway Controller fügt damit einen Filter in die Aushandlung der Bearereigenschaften zwischen den Media Gateways und dem Partner-Media Gateway Controller ein.

Die Erfindung ist nicht allein auf Media Gateways/ Media Gateway Controller beschränkt. Sie lässt sich in gleicher Weise auch auf IP Clients anwenden. Ebenso kann die Erfindung auch auf andere Netze bzw. Transporttechnologien wie beispielsweise ATM oder MPLS angewandt werden, IP Netze sind nicht zwingend erforderlich, obwohl die Erfindung anhand von IP Netzen beschrieben wird.

Vorteilhafte Weiterbildungen der Erfindung sind in den Unteransprüchen angegeben.

Die Erfindung wird im folgenden anhand eines figürlich dargestellten Ausführungsbeispieles näher erläutert.

Es zeigen:
- Fig 1: eine Netzkonfiguration mit PSTN/ ISDN Endgeräten, Media Gateways und Media Gateway Controllern,
- Fig 2: das erfindungsgemäße Verfahren

Erfindungsgemäß wird jedem Media Gateway Controller eine Referenzliste zugewiesen. Diese enthält die Bearereigenschaften, die der betreffende Netzbetreiber in seinem Netz unterstützt. Dies können beispielsweise eine vorgegebene Anzahl von Codecs sein, oder eine Priorisierung der Codecs. Die Referenzliste der Bearereigenschaften und die Priorität der jeweiligen Bearereigenschaften sollen administrierbar sein. Auf diese Weise kann der Netzbetreiber die Bearereigenschaften in den wenigen Media Gateway Controllern nach Bedarf konfigurieren.

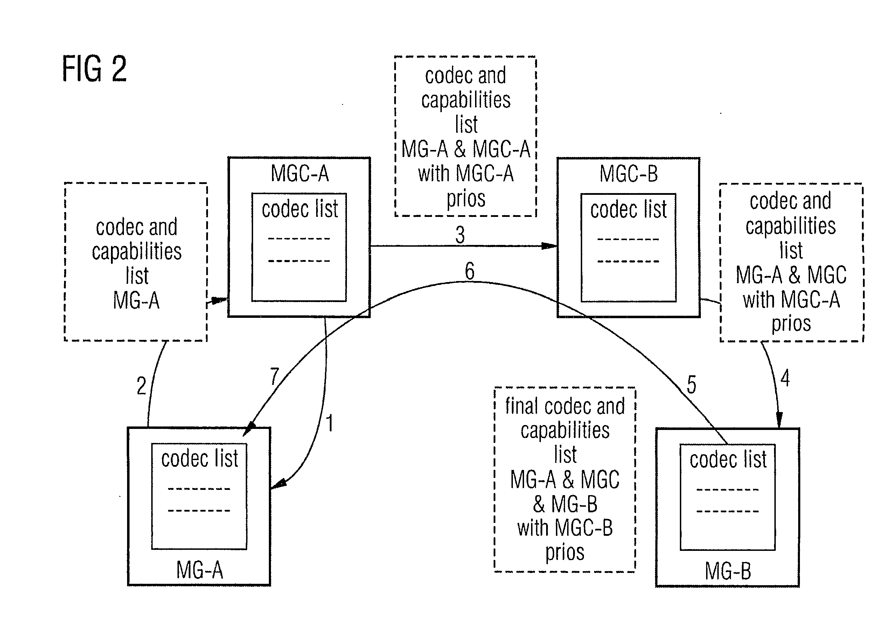

Bei vorliegendem Ausführungsbeispiel wird gemäss Fig. 2 davon ausgegangen, dass ein Teilnehmer der A-Seite eine Verbindung zu einem Teilnehmer der B-Seite aufzunehmen wünscht. Der Media Gateway Controller MGC-A der A-Seite wird hierüber während des Verbindungsaufbaus informiert. Daraufhin wird dessen Referenzliste mit der Liste des Media Gateway MG-A der A-Seite verglichen (Schritte 1, 2) und die Schnittmenge zwischen beiden Listen gebildet. Beispielsweise können alle Bearereigenschaften gestrichen werden, die nicht in der eigenen Referenzliste enthalten sind bzw. in der eigenen Referenzliste gesperrt sind. Das Ergebnis wird vom Media Gateway Controller MGC-A dem Media Gateway Controller MGC-B der B-Seite mitgeteilt (Schritt 3).

Wird das Ergebnis (z. B. der neu ausgewählte Codec) vom Media Gateway Controller MGC-B der B-Seite nicht unterstützt, wird der A-Seite über eine entsprechende Quittungsnachricht eine Zurückweisung mitgeteilt. Andernfalls wird dieses Ergebnis dem Media Gateways MG-B der B-Seite angeboten (Schritt 4). Die hier nicht unterstützten Bearereigenschaften werden aus dem Angebot gestrichen und das Ergebnis in eine Liste eingebunden. Diese Liste wird dann über den Media Gateway Controller MGC-B der B-Seite (Schritt 5) und dem Media Gateway Controller MGC-A der A-Seite (Schritt 6) dem Media Gateway MG-A der A-Seite (Schritt 7) zur Verfügung gestellt.

Das Aushandeln ist Teil des Verbindungsaufbaus. Die Nutzinformationen können nun zwischen dem Media Gateway MG-A der A-Seite und dem Media Gateway MG-B der B-Seite nach Massgabe der ausgehandelten Bearereigenschaften übertragen werden.

## Patentansprüche

1. Verfahren zum Aushandeln von Bearereigenschaften in Kommunikationsnetzen, mit Media Gateway Controllern (MGC) und Media Gateways (MG), in denen Bearereigenschaften geführt werden,
**dadurch gekennzeichnet,**
**dass** in den Media Gateway Controllern (MGC) Referenzlisten mit beeinflussbaren Bearereigenschaften geführt werden.

2. Verfahren nach Anspruch 1,
**dadurch gekennzeichnet,**
**dass** das Aushandeln der Bearereigenschaften stets über Media Gateway Controller (MGC-A, MGC-B) geführt wird.

3. Verfahren nach Anspruch 1, 2,
**dadurch gekennzeichnet,**
**dass** die Bearereigenschaften als Codecs ausgebildet sind.

4. Verfahren nach Anspruch 1, 2,
**dadurch gekennzeichnet,**
**dass** die Bearereigenschaften als Priorisierung der Codecs ausgebildet sind.

5. Verfahren nach Anspruch 1 bis 4,
**dadurch gekennzeichnet,**
**dass** ein Media Gateway Controller (MGC-A, MGC-B) mit einer Referenzliste eine Masterfunktion für die von ihm gesteuerte Gruppe von Media Gateways (MG) aufweist.

6. Verfahren nach einem der vorstehenden Ansprüche,
**dadurch gekennzeichnet,**
**dass** die Beeinflussung der Bearereigenschaften durch eine vom Netzbetreiber durchgeführte Konfiguration erfolgt.

7. Verfahren nach einem der vorstehenden Ansprüche,
**dadurch gekennzeichnet,**
**dass** die Kommunikationsnetze als IP Netze ausgebildet sind.

## Claims

1. Method for negotiating bearer properties in communication networks, with Media Gateway Controllers (MGC) and Media Gateways (MG), in which bearer properties are maintained,
**characterized in that**
Reference lists with influenceable bearer properties are maintained in the Media Gateway Controllers (MGC).

2. Method according to claim 1,
**characterized in that**
the negotiation of the bearer properties is always undertaken via Media Gateway Controllers (MGC-A, MGC-B).

3. Method according to claim 1, 2
**characterized in that**
the bearer properties are embodied as codecs.

4. Method according to claim 1, 2
**characterized in that**
the bearer properties are embodied as prioritization of the codecs.

5. Method according to claim 1 to 4,
**characterized in that**
a Media Gateway Controller (MGC-A, MGC-B) with a reference list has a master function for the group of Media Gateways (MG) controlled by it.

6. Method according to one of the previous claims,
**characterized in that**
the bearer properties are influenced by the configuration undertaken by the network operator.

7. Method according to one of the previous claims,
**characterized in that**
the communication networks are embodied as IP networks.

## Revendications

1. Procédé pour négocier des propriétés de porteuse dans des réseaux de communication, avec des Media Gateway Controllers (MGC) et des Media Gateways (MG), dans lesquels les propriétés de porteuse sont gérées,
**caractérisé en ce que**
des listes de référence avec des propriétés de porteuse influençables sont gérées dans les Media Gateway Controllers (MGC).

2. Procédé selon la revendication 1,
**caractérisé en ce que**
la négociation des propriétés de porteuse est toujours gérée par des Media Gateway Controllers (MGC-A, MGC-B).

3. Procédé selon les revendications 1, 2,
**caractérisé en ce que**
les propriétés de porteuse sont conçues comme des Codecs.

4. Procédé selon les revendications 1, 2,
**caractérisé en ce que**
les propriétés de porteuse sont conçues comme une définition de priorité des Codecs.

5. Procédé selon les revendications 1 à 4,
**caractérisé en ce que**
un Media Gateway Controller (MGC-A, MGC-B) avec une liste de référence présente une fonction maître pour le groupe de Media Gateways (MG) qu'il contrôle.

6. Procédé selon l'une quelconque des revendications précédentes,
**caractérisé en ce que**
l'influence sur les propriétés de porteuse s'effectue par une configuration effectuée par l'exploitant du réseau.

7. Procédé selon l'une quelconque des revendications précédentes,
**caractérisé en ce que**
les réseaux de communication sont conçus comme des réseaux IP.
